# EUROPÄISCHE PATENTANMELDUNG

(11) **EP 1 120 310 A2**
(43) Veröffentlichungstag der Anmeldung: **01.08.2001**
(21) Anmeldenummer: 01101414.9
(22) Anmeldetag: 23.01.2001
(51) Int. Cl.: B60Q 1/068

(54) **Scheinwerferbaugruppe für ein Kraftfahrzeug**

(30) Priorität: 25.01.2000 DE 10002956
(71) Anmelder: Hella KG Hueck & Co., 59552 Lippstadt (DE)
(72) Erfinder: Seiger, Ralf, 59557 Lippstadt (DE)

(57) **Zusammenfassung**

Die Erfindung betrifft eine Scheinwerferbaugruppe (1) für ein Kraftfahrzeug, mit einem Scheinwerfergehäuse (9), in dem mindestens ein Scheinwerfer und eine Sensoreinheit (2) angebracht sind. Um eine bessere Justiermöglichkeit zur Verfügung zu stellen, schlägt die Erfindung vor, daß die Sensoreinheit (2) in einer Haltevorrichtung (4, 6) angebracht ist, in der sie unabhängig vom Scheinwerfer ausrichtbar ist.

## Beschreibung

Die vorliegende Erfindung betrifft eine Scheinwerferbaugruppe für ein Kraftfahrzeug mit einem Scheinwerfergehäuse, in dem mindestens ein Scheinwerfer und eine Sensoreinheit angebracht sind, wobei der Scheinwerfer und die Sensoreinheit durch eine Öffnung des Scheinwerfergehäuses nach außen gerichtet sind.

Bei Kraftfahrzeugen werden zunehmend sogenannte ACC(Automatic Cruise Control)-Sensoren eingesetzt, beispielsweise Radar-, Infrarot- oder Ultraschall-Abstandsmeßeinrichtungen. Diese zeigen dem Fahrer auch bei schlechter Sicht oder bei Dunkelheit zuverlässig den Abstand zu einem vorausfahrenden Fahrzeug oder einem ruhenden Hindernis an, so daß der Fahrer rechtzeitig abbremsen kann, oder leiten über entsprechende Steuermittel selbsttätig ein Bremsmanöver ein. Für diese Funktion ist es unabdingbar, daß die ACC-Sensoren freie Sicht auf ihr vor dem Fahrzeug liegendes Meßfeld haben. Im Stand der Technik ist daher ausweislich der DE 196 32 252 A1 und der DE 42 01 214 C1 bereits vorgeschlagen worden, die Sensoreinheiten in die Scheinwerfergehäuse eines Kraftfahrzeugs zu integrieren.

Durch die Integration der Sensoreinheit in ein Scheinwerfergehäuse wird die Funktionalität dieser Scheinwerferbaugruppe erweitert, wobei in vorteilhafter Weise ausgenutzt wird, daß das Scheinwerfergehäuse über diverse Versorgungs-und Steuerkabel mit der Bordelektrik verbunden ist, so daß durch den zusätzlichen ACC-Sensor an dieser Stelle praktisch kein zusätzlicher Installations-und Montageaufwand verursacht wird. Dies kommt der modernen, rationellen Modulbauweise besonders entgegen. Die Anordnung im Scheinwerfergehäuse hat zudem den Vorteil, daß in Strahlrichtung des Scheinwerfers, das heißt durch die Scheinwerfergehäuse-Öffnung nach vorn freie Sicht auf das Meßfeld gewährleistet ist. Außerdem kann eine funktionale und ästhetisch gelungene Eingliederung in das Fahrzeug-Gesamtkonzept erfolgen. Beispielsweise kann eine vorhandene Scheinwerfer-Reinigungsanlage zur Reinigung der Sensoreinheit mit genutzt werden.

Ein einwandfreies Funktionieren des ACC-Sensors setzt jedoch voraus, daß die Sensoreinheit bezüglich der relativen Orientierung zur Quer- und Hochachse des Fahrzeugs auf einen Meßpunkt in vorgegebener Entfernung, beispielsweise 150m vor dem Fahrzeug genau justierbar ist. Eine derartige Grundeinstellung ist zumindest bei der Montage der Scheinwerferbaugruppe erforderlich. Im Einzelfall kann es darüber hinaus angebracht sein, eine Einstellmöglichkeit, beispielsweise in Abhängigkeit vom Ladezustand des Fahrzeugs vorzusehen.

Die aus der DE 196 32 252 A1 hervorgehende Befestigung für die Sensoreinrichtung ist starr im Scheinwerfergehäuse fixiert und eröffnet daher weder bei der Montage, noch im Betrieb Einstellmöglichkeiten. In der obengenannten DE 42 01 214 C1 wird eine Justiervorrichtung für ein Radar-Abstandswarngerät eines Fahrzeuges vorgeschlagen, bei dem der Radarsensor zusammen mit einem Justierscheinwerfer starr zu einer verstellbar am Fahrzeug angebrachten Einheit verbunden ist. Der Justierscheinwerfer dient dabei jedoch lediglich als Pilotstrahl für die manuelle Justierung der ansonsten unsichtbaren Radarstrahlung. Eine unabhängige Verstellung der Sensoreinheit innerhalb des Scheinwerfergehäuses ist damit nicht möglich. Außerdem wird in der Praxis unter den beengten Einbauverhältnissen im Scheinwerfergehäuse in der Regel kein Einbauraum für einen zusätzlichen Justierscheinwerfer vorhanden sein.

Angesichts dessen liegt der Erfindung das Problem zugrunde, daß es mit keiner der im Stand der Technik bekannten Befestigungs- bzw. Justiervorrichtungen möglich ist, die Sensoreinheit innerhalb einer Scheinwerferbaugruppe relativ zu dem darin ebenfalls enthaltenen Scheinwerfer zu orientieren.

Zur Lösung dieser Problematik schlägt die Erfindung ausgehend von dem eingangs erwähnten Stand der Technik vor, daß die Sensoreinrichtung in einer Haltevorrichtung angebracht ist, in der sie unabhängig vom Scheinwerfer ausrichtbar ist.

Bei der erfindungsgemäßen Scheinwerferbaugruppe ist die Sensoreinheit erstmals in einer eigenen Haltevorrichtung gelagert. Durch die Verstellbarkeit dieser Haltevorrichtung kann der Meßstrahl bzw. das Meßfeld der Sensoreinheit individuell genau justiert werden, ohne daß die Einbaulage des Scheinwerfergehäuses bzw. der darin befindlichen Scheinwerfer damit gleichfalls verändert werden müßte.

Die erfindungsgemäße Lagerung der Sensoreinheit in dem Scheinwerfergehäuse in der erfindungsgemäß frei verstellbaren Haltevorrichtung bringt den besonderen Vorteil mit sich, daß Maßtoleranzen beim Einbau der Scheinwerferbaugruppe in die Fahrzeugkarosserie, die sich bezüglich der Orientierung der Sensoreinheit auswirken könnten, ohne Probleme durch eine nachträgliche Justierung der Sensoreinheit ausgeglichen werden können. Eine Anpassung an eine abweichende Maßcharakteristik der Sensoreinheit ist ebenfalls ohne weiteres möglich. Die Strahlführung der Scheinwerfer wird dabei nicht beeinflußt.

Damit ermöglicht es die Erfindung erstmals, bei einer Scheinwerferbaugruppe, wie sie aus der DE 196 32 252 A1 bekannt ist, die Sensoreinheit nachträglich zu verstellen bzw. zu justieren. Von besonderem Vorteil ist dabei, daß diese Justierung erstmals unabhängig von einer Verstellung der Scheinwerfer möglich ist. Zum einen kann dadurch die einstellbare Halterung nämlich so kompakt ausgestaltet sein, daß sie im Scheinwerfergehäuse untergebracht werden kann. Zum anderen berücksichtigt dies, daß wegen der in der Regel unterschiedlichen Strahlcharakteristiken von Scheinwerfer und Sensoreinheit eine gemeinsame Verstellung in der Regel nicht anzustreben ist.

Bevorzugt weist die Haltevorrichtung ein Schwenklager auf, in dem die
Sensoreinheit um die Fahrzeugquerachse verdrehbar gelagert ist. Dadurch wird eine Höhenverstellung des Meßstrahls der Sensoreinheit ermöglicht. Zur seitlichen Justierung weist die Haltevorrichtung ein Schwenklager auf, in dem die Sensoreinheit um die Fahrzeughochachse verdrehbar gelagert ist. Diese Schwenklager können um die Quer- und Hochachse zu einer zweiachsigen Lagerung, etwa nach dem Konstruktionsprinzip einer kardanischen Aufhängung miteinander kombiniert werden, so daß eine unabhängige Höhen- und Seitenverstellbarkeit gegeben ist.

Die Sensoreinheit befindet sich zweckmäßigerweise in einem Sensorgehäuse. Neben den eigentlichen Sensorelementen, beispielsweise licht- oder schallempfindlichen Sendern und Empfängern, Funk- oder Radarantennen und dergleichen, kann in diesem Sensorgehäuse die Ansteuer- und Betriebselektronik untergebracht sein. Dadurch wird eine kompakte Baueinheit gebildet, welche störungsunempfindlich ist und mit geringem Aufwand in die Bordelektronik integriert werden kann.

Das Sensorgehäuse kann im wesentlichen quaderförmig ausgebildet sein, beispielsweise als Kunststoffgehäuse. Diese kastenartige Formgebung ist besonders vorteilhaft, wenn das Sensorgehäuse angeformte Achszapfen aufweist. Diese können dann senkrecht zu den Seitenwänden seitlich vorstehend ausgebildet sein.

Bei einer bevorzugten Ausführungsform weist die Haltevorrichtung einen Tragrahmen auf, in dem die Sensoreinheit um mindestens eine Achse schwenkbar gelagert ist. Dabei ist das Sensorgehäuse in die Öffnung des Tragrahmens eingesetzt, wobei eine Schwenkachse quer zur Rahmenöffnung liegt. Außen an der Sensoreinheit und in dem Tragrahmen sind korrespondierende Lagerzapfen und Lagerbohrungen vorgesehen. Vorteilhaft ist es beispielsweise, daß der Tragrahmen Lagerstellen für die vorgenannten, an das Sensorgehäuse angeformten Achszapfen aufweist. Auf diese Weise kann die Sensoreinheit beispielsweise um die Fahrzeugquerachse verschwenkbar in dem Tragrahmen gelagert sein.

Eine bevorzugte Weiterbildung der Erfindung sieht vor, daß der Tragrahmen um eine Achse senkrecht zur Lagerung der Sensoreinheit schwenkbar gelagert ist. Dadurch wird eine zweiachsige Bewegbarkeit der Sensoreinheit realisiert. Diese ist beispielsweise um die Querachse innerhalb des Tragrahmens verdrehbar, wobei der Tragrahmen selbst innerhalb des Scheinwerfergehäuses um die Fahrzeughochachse verschwenkbar ist. Dadurch wird eine zweiachsige Aufhängung für das Sensorgehäuse gebildet, welche eine Hoch- und Querverstellung des Meßstrahls zuläßt.

Der Tragrahmen ist bevorzugt an Tragarmen eines Befestigungsflansches gelagert. Dieser Befestigungsflansch kann in einer korrespondierenden Öffnung mittels entsprechender Flanschbefestigungen, vorzugsweise lösbarer Klemmen, Bolzen, Schrauben oder dergleichen festgelegt werden. Dabei stehen die Tragarme aus der Flanschebene vor, so daß der Tragrahmen frei verschwenkbar vor dem Befestigungsflansch gehalten wird.

Der Befestigungsflansch ist vorzugsweise als Kappe ausgebildet, die von hinten in eine Einbauöffnung des Scheinwerfergehäuses einsetzbar ist. Diese kappenartige Form bildet eine bewährte Ausführung, um Funktionsteile in Karosserie- oder Gehäuseöffnungen zu fixieren. Vorliegend stehen die vorgenannten Tragarme des Befestigungsflansches im montierten Zustand in Richtung der Einbauöffnung in das Scheinwerfergehäuse vor, so daß die an den Tragarmen gelagerte Sensoreinheit in Betriebsstellung in dem Scheinwerfergehäuse gehaltert wird. Die Vorderseite des Sensorgehäuses, wo die Ein- und Ausgänge der Meßstrahlen angeordnet sind, ist dabei auf die Ausgangsöffnung des Scheinwerfergehäuses gerichtet bzw. befindet sich hinter der dort vorgesehenen Scheinwerfer-Abschlußscheibe.

Besonders vorteilhaft ist es, daß die Tragarme, an denen die Sensoreinheit gelagert ist, im Scheinwerfergehäuse abgestützt werden. Im Scheinwerfergehäuse sind dazu Stützflächen vorgesehen, die im eingebauten Zustand eine Anlage bzw. eine Lagerfläche für die in das Gehäuse ragenden Tragarme bilden, so daß diese fest und schwingungssicher in dem Scheinwerfergehäuse integriert sind. Bevorzugt sind die Stützflächen in Form von Stützrippen ausgebildet. Das Sensorgehäuse wird dabei mit dazu korrespondierenden Zapfen oder Rippen versehen, welche in die Stützrippen einsetzbar sind und eine formschlüssige Arretierung des Sensorgehäuses im Scheinwerfergehäuse bewirken. Die Stützrippen erstrecken sich von der Einbauöffnung in dem Scheinwerfergehäuse in Einbaurichtung des Befestigungsflansches nach innen. Beim Einsetzen werden die Tragarme zwischen die Führungsrippen eingeschoben und sind damit besonders gut, auch gegen seitliche Verschiebung sicher verriegelt.

Bevorzugt weist das Sensorgehäuse Eingriffselemente für Einstellmittel auf, beispielsweise auf der Außenseite vorstehende, quer zu einer Schwenkachse angeformte Rippen. Diese Rippen sind bevorzugt auf der Rückseite des Sensorgehäuses angeordnet. Dort wird ein Verstellmechanismus mit einem in Längsrichtung verschiebbaren Verstellelement vorgesehen, welches die Rippen, daß heißt in die Eingriffselemente eingreift. Dabei hat die Anbringung auf der Rückseite den Vorteil, daß die Verstellelemente im eingebauten Zustand von der Rückseite des Scheinwerfergehäuses her weiterhin gut zugänglich sind.

Alternativ können die Anschlußelemente für die Einstellmittel ein radial bezüglich einer Schwenkachse vorstehendes Lagerauge umfassen. Dieses Lagerauge, welches bevorzugt an einem Arm seitlich am Sensorgehäuse abstehend angebracht ist, dient zur schwenkbeweglichen Verbindung mit einem korrespondierenden Lagerzapfen einer Einstellvorrichtung. Eine Längsbewegung dieses Lagerzapfens ist dadurch in eine Schwenkbewegung des Sensorgehäuses umsetzbar.

Die Einstellmittel umfassen vorzugsweise Einstellschrauben und Gewindestücke, die zwischen dem Befestigungsflansch (Kappe) und dem Sensorgehäuse relativ verstellbar sind. Bei dieser Form von Einstellmitteln wird ausgenutzt, daß beim Einschrauben der Einstellschrauben eine Längsverschiebung relativ zu einem Gewindestück erfolgt, welche zur Verstellung des Sensorgehäuses in eine Schwenkbewegung umgesetzt wird. Dazu ist beispielsweise die Einstellschraube axial fest am Befestigungsflansch gelagert, so daß das Gewindestück beim Einschrauben relativ zum Scheinwerfergehäuse in Axialrichtung verschoben wird. Über Verbindungsstücke wird das Gewindestück an Eingriffselemente am Sensorgehäuse angeschlossen, beispielsweise zwischen Rippen oder an einem Lagerauge. Alternativ ist es gleichfalls möglich, daß die Gewindestücke am Sensorgehäuse fest angebracht sind und die Axialbewegung bei der Verdrehung der Einstellschrauben über die Anschlußelemente in eine Schwenkbewegung umgesetzt wird.

Die Einstellmittel sind bevorzugt am Befestigungsflansch gegengelagert. Dabei sollten sie von der Außenseite des Befestigungsflansches her zugängliche Werkzeugansätze haben. Dadurch wird ermöglicht, daß nach der Montage des Befestigungsflansches im Scheinwerfergehäuse durch Betätigung der Einstellmittel die Justierung der Sensoreinheit vorgenommen werden kann. Als Werkzeugansätze können beispielsweise Kreuzschlitz- oder Sechskantköpfe vorgesehen sein. Zusätzlich können gegebenenfalls Rändelköpfe vorgesehen sein, um eine manuelle Drehung ohne Werkzeuge zu ermöglichen.

In einer Weiterbildung der Einstellmittel weisen diese Winkelgetriebe auf. Diese Winkelgetriebe befinden sich zwischen dem von außen zugänglichen Werkzeugansatz und den Einstellschrauben. Dadurch kann eine bessere Zugänglichkeit erreicht werden, indem beispielsweise ein Schraubenzieher quer zur eigentlichen Verstellachse von oben oder von der Seite angesetzt wird, wo der Zugang nicht durch die üblicherweise im Motorraum relativ dicht angeordneten Aggregate behindert wird.

In der Öffnung des Scheinwerfergehäuses wird in der Regel eine Scheinwerfer-Abschlußscheibe angebracht sein. Soweit die Sensoreinheit optische Sensorelemente, beispielsweise Infrarot- oder Laser- Abstandsmesser aufweist, kann die Sensoreinheit hinter dieser Scheinwerfer-Abschlußscheibe angeordnet sein. Es ist jedoch gleichfalls möglich, daß die Sensoreinheit akustische oder Radar- Sensorelemente aufweist, die vorzugsweise neben der Abschlußscheibe bzw. in Durchbrüchen davon angeordnet sein sollten.

Bei einer besonders vorteilhaften Weiterbildung der Erfindung besteht eine Einstellmöglichkeit, beispielsweise in Abhängigkeit vom Ladezustand des Fahrzeugs, wenn die Sensoreinheit durch eine Leuchtweiteregelungsanlage um die horizontale Fahrzeugquerachse verstellbar ist. Dadurch kann bei der Verwendung eines Infrarotsensors, dieser eine kleinere Streuung seines ausgesendeten Infrarotlichtbündels und somit eine größere Reichweite aufweisen. Je genauer der Leuchtweiteregler angesteuert wird, um so kleiner kann die Streuung des Infrarotlichtbündels gewählt werden. Der dynamische Leuchtweiterregler, bei dem die Verstellung automatisch erfolgt, wird genauer angesteuert, als der statische Leuchtweiteregler, bei eine manuelle Einstellung vom Fahrgastinnenraum des Fahrzeugs her erfolgt.

Weiterhin ist es vorteilhaft, wenn für einen Scheinwerferreflektor und die Sensoreinheit jeweils ein Leuchtweiteregler besteht, die synchron verstellbar sind. Dadurch kann der Leuchtweiteregler der Sensoreinheit durch ein elektrisches Steuersystem für den Scheinwerferreflektor mit angesteuert werden.

Besonders vorteilhaft ist es, wenn für die Sensoreinheit und einen Scheinwerferreflektor zusammen ein Leuchtweiteregler vorgesehen ist und zwischen der Sensoreinheit und dem Scheinwerferreflektor eine gelenkartige Vorrichtung besteht, die ein Einstellmittel aufweist. Dadurch kann auch eine schwere Sensoreinheit, ohne die Aufhängung des Scheinwerferreflektors zu belasten, mit verstellt werden. Wenn die gelenkartig Vorrichtung, ein eine Einstellschraube aufweisendes Einstellmittel beinhaltet, ist die Sensoreinheit um die Fahrzeugquerachse manuell justierbar.

Die Sensoreinheit kann auch mit einer Kurvenregelungsanlage gekoppelt sein, um die Sensoreinheit um die Fahrzeughochachse zu verstellen. Hierbei ist es zweckmäßig, wenn die Kurvenregelungsanlage sowohl einen Kurvensteller für den Scheinwerferreflektor als auch einen Kurvensteller für die Sensoreinheit synchron verstellt. Dadurch ist ein automatisches Schwenken des Scheinwerferreflektors und der Sensoreinheit entsprechend einem Kurvenverlauf der Fahrbahn gegeben.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen vertikalen Längsschnitt durch eine erfindungsgemäße erste Scheinwerferbaugruppe;
- Fig. 2: einen horizontalen Querschnitt durch die Scheinwerferbaugruppe gemäß Fig. 1;
- Fig. 3: einen vertikalen Längsschnitt durch eine zweite Scheinwerferbaugruppe;
- Fig. 4: einen vertikalen Längsschnitt durch eine dritte Scheinwerferbaugruppe und
- Fig. 5: einen horizontalen Querschnitt durch die Scheinwerferbaugruppe gemäß Fig. 4.

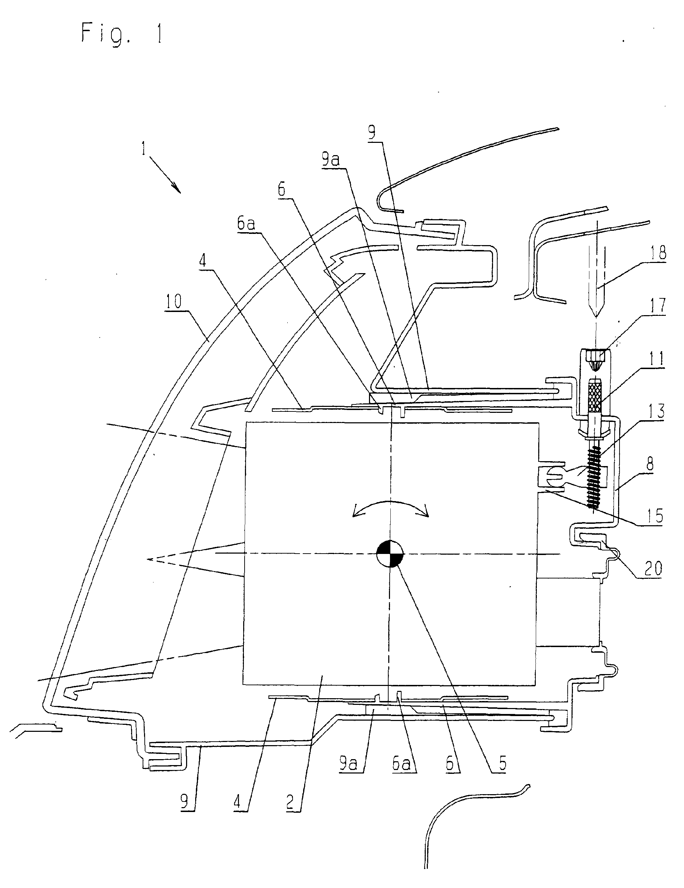

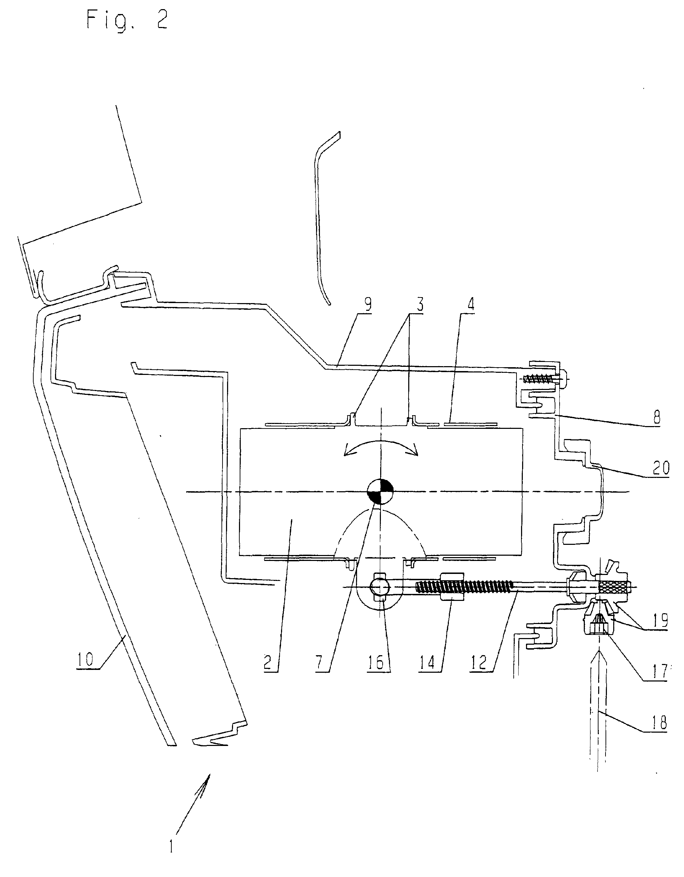

Fig. 1 zeigt einen Längsschnitt, das heißt eine Ansicht in Richtung der Fahrzeugquerachse und Fig. 2 einen Querschnitt von oben, das heißt eine Ansicht in Richtung der Fahrzeughochachse. Als ganzes ist die Scheinwerferbaugruppe darin mit dem Bezugszeichen 1 versehen. In dieser Scheinwerferbaugruppe 1 ist eine ACC-Sensoreinheit angeordnet, die in einem quaderförmigen Sensorgehäuse 2 aus Kunststoff oder Metall untergebracht ist. Dieses Sensorgehäuse 2 hat auf seinen Seitenwänden integrierte, das heißt einstückig angeformte Achszapfen 3, mit denen es in einem Tragrahmen 4 aus Stahlblech um die Fahrzeugquerachse 5 verschwenkbar gelagert ist. Durch Drehung um diese Querachse 5 erfolgt eine Höhenverstellung der nach vorn, das heißt in den Zeichnungen nach links aus dem Sensorgehäuse 2 gerichteten Meßstrahlen.

Der Tragrahmen 4 weist oben und unten Lageröffnungen auf, in welche Tragarme 6 mit ihren angeformten Lagerzapfen 6a eingreifen, so daß der Tragrahmen 4 um eine Fahrzeughochachse 7 verdrehbar gelagert ist, wie dies in Fig. 2 erkennbar ist.

Die Tragarme 6 stehen senkrecht zur Flanschebene von einem Befestigungsflansch 8 ab, der als Kappe ausgebildet ist und von hinten in einer Öffnung eines Scheinwerfergehäuses 9 angeflanscht ist. Die vordere Öffnung dieses Scheinwerfergehäuses 9 ist mit einer transparenten Scheinwerfer-Abschlußscheibe 10 abgeschlossen.

In der Aufnahmeöffnung des Scheinwerfergehäuses 9 sind Stützrippen 9a vorgesehen, welche in eingebautem Zustand oben und unten an den Tragarmen 6 anliegen und diese damit sicher in dem Scheinwerfergehäuse 9 gegen Relativbewegung absichern bzw. verriegeln.

Als Einstellmittel sind an dem Befestigungsflansch 8 Einstellschrauben 11 und 12 drehbar, jedoch axial fixiert angebracht. Diese Einstellschrauben 11 und 12 sind in Gewindestücke 13 und 14 eingeschraubt. Diese Gewindestücke 13 und 14 werden bei der Drehung der Einstellschrauben 11 und 12 axial in Längsrichtung verschoben. Dadurch, daß das Gewindestück 13 zwischen Rippen 15 eingreift, die als Anschlußelemente auf der Rückseite des Sensorgehäuses 2 angeformt sind, und das Gewindestück 14 in einem Lagerauge 16 angelenkt ist, welches seitlich vorstehend an dem Tragrahmen 4 angeformt ist, wird das Sensorgehäuse 2 bei einer Drehung der Einstellschraube 11 um die Querachse 5 und bei einer Drehung der Einstellschraube 12 um die Hochachse 7 verschwenkt. Das bedeutet, daß mit der Einstellschraube 11 eine Höhenjustierung und mit der Einstellschraube 12 eine Seitenjustierung der Sensoreinheit 2 ermöglicht wird.

Die Einstellschraube 11 hat einen axial eingeformten Werkzeugeingriff 17, beispielsweise einen Kreuzschlitz, in den, wie gestrichelt angedeutet, zur Einstellung ein Kreuzschlitz-Schraubendreher 18 einsetzbar ist. Dagegen ist der Kopf der Einstellschraube 12 mit einer Kegelverzahnung versehen, welcher mit dem ebenfalls mit einer korrespondierenden Kegelverzahnung versehenden Kreuzschlitz-Werkzeugansatz 17 ein Winkelgetriebe 19 bildet. Dadurch kann das Werkzeug 18 bequem von der Seite angesetzt werden, wie dies aus Fig. 2 ersichtlich ist. Der Befestigungsflansch 8 hat weiterhin eine von hinten aufgesetzte Gummikappe 20, durch welche die im einzelnen nicht eingezeichneten Versorgungs- und Steuerkabel abgedichtet und flexibel zum Sensorgehäuse 2 durchgeführt werden.

Die dargestellte Halterungsvorrichtung für die ACC-Sensoreinheit 2 ist ausgesprochen kompakt, montagefreundlich und in eingebautem Zustand gut justierbar.

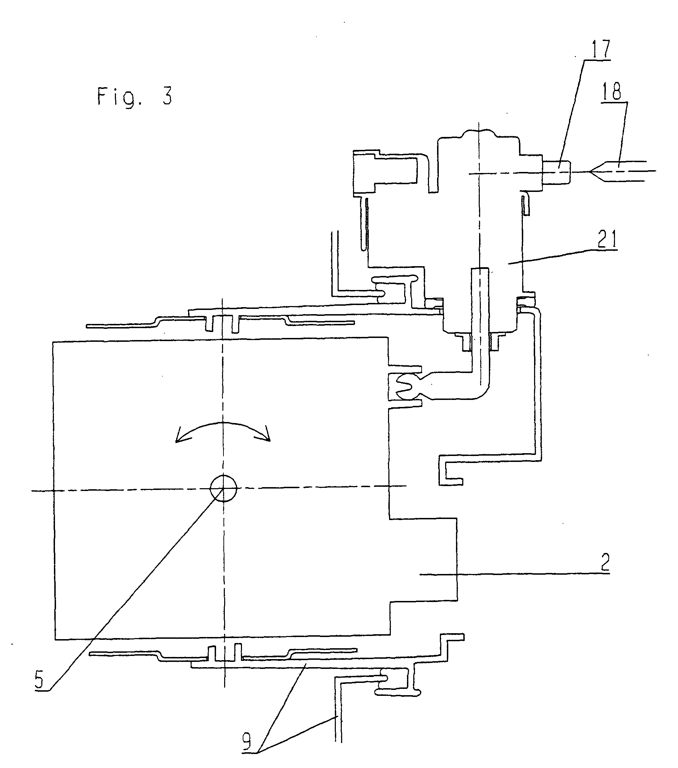

Die in Fig. 3 dargestellt Scheinwerferbaugruppe weist einen Reichweiteregler (21) auf, durch die die Sensoreinheit (2) um die Fahrzeugquerachse verstellbar (5) ist. Bei dem Reichweiteregler (21) kann es sich um einen statischen Steller, der manuell vom Fahrzeuginnenraum betätigbar ist, oder um einen dynamischen Steller handeln, der automatisch gesteuert wird. Hierbei ist es zweckmäßig, wenn ein Scheinwerferreflektor, der in Fig. 3 nicht dargestellt ist, ebenfalls durch einen Reichweiteregler schwenkbar ist und beide Reichweiteregler synchron verstellbar sind. Der Reichweiteregler (21) weist einen Werkzeugeingriff (17) auf, um mittels eines Kreuzschlitz-Schraubendrehers (18) manuell eine Verstellung um die Fahrzeugquerachse (5) vornehmen zu können.

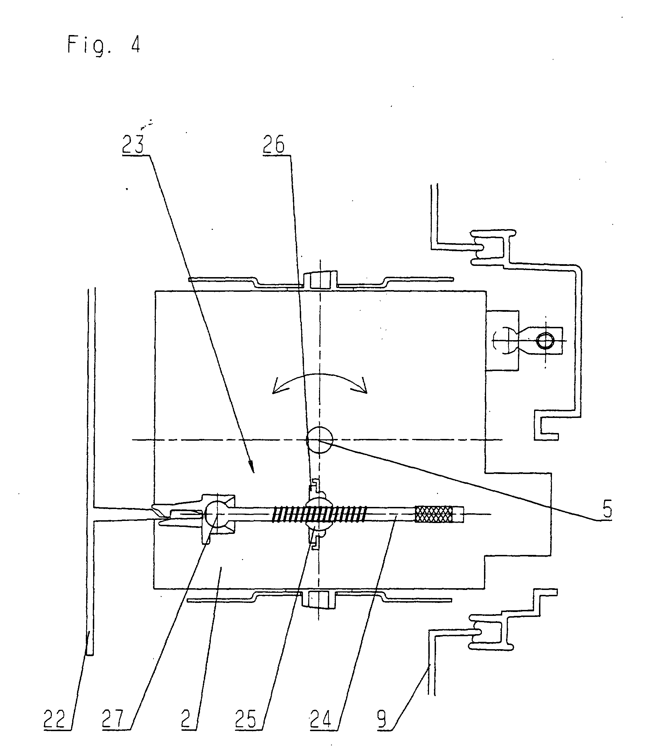

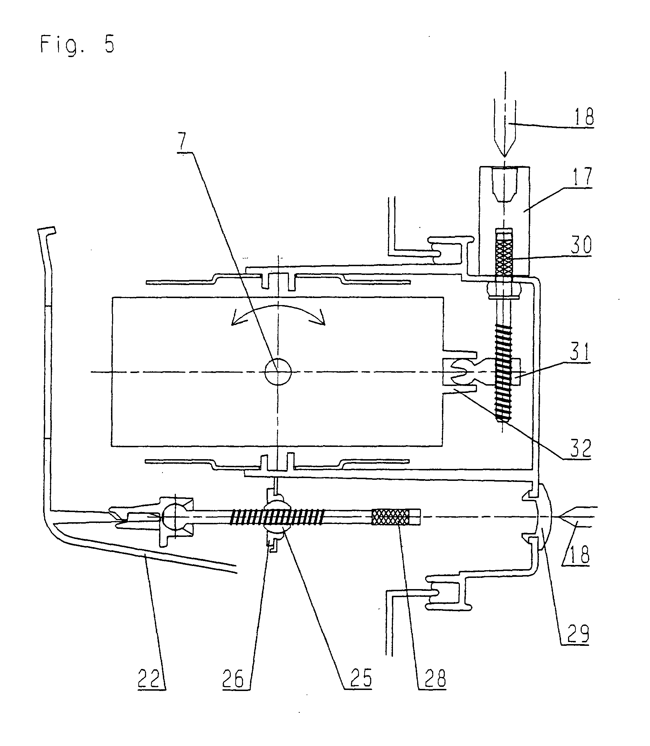

In den Figuren 4 und 5 ist eine Scheinwerferbaugruppe dargestellt, bei dem ausschließlich ein neben der Sensoreinheit (2) angeordneter Scheinwerferreflektor (22) direkt mit einem nicht dargestellten dynamischen Reichweiteregler gekoppelt ist. Der Reichweiteregler ist an dem Scheinwerfergehäuse (9) in ähnlicher Art und Weise befestigt, wie der in Fig. 3 dargestellte Reichweiteregler (21). Der Scheinwerferreflektor (22) und die Sensoreinheit (2) ist durch eine zwischen ihnen angeordnete gelenkartige Verbindung (23) gekoppelt. Durch die gelenkartige Verbindung (23) wird bei einem automatischen Verstellen der Scheinwerferreflektors (22) um eine Fahrzeugquerachse die Sensoreinheit (2) um die Fahrzeugquerachse (5) synchron mit verstellt. Die gelenkartig Verbindung (23) weist eine Einstellschraube (24) auf, welche auf eine kugelförmige Mutter (25) aufgeschraubt ist. Die kugelförmige Mutter (25) ist in einer starr mit der Sensoreinheit (2) verbundenen Kugelschale (26) gelagert. Die Kugelschale (26) ist unterhalb der Fahrzeugquerachse (5) angeordnet und die Einstellschraube (24) erstreckt sich mit ihrer Längsachse parallel zur nicht dargestellten Fahrzeuglängsachse. Die Einstellschraube (24) trägt an ihrem zur Vorderseite des Scheinwerfers gerichteten Endabschnitt einen Kugelkopf eines Kugelgelenks (27). Das Kugelgelenk (27) weist eine starr mit dem Scheinwerferreflektor (22) verbundene Gelenkpfanne auf. Die Einstellschraube (30) wiest auf dem dem Kugelgelenk (27) abgewandten Endabschnitt eine Handhabe (28) auf, die zur manuellen Justierung der Sensoreinheit (2) dient. Die Handhabe (28) ist durch eine Gehäuseöffnung, die durch einen Deckel (29) verschließbar ist, über einen Kreuzschlitz-Schraubendreher (18) erreichbar. Durch die Einstellschraube (30) ist die Sensoreinheit (2) um die Fahrzeughochachse (7) justierbar. Die Einstellschraube (30) ist in einem Gehäuseloch der Scheinwerfergehäuses (9) drehbar gelagert und weist an dem aus dem Scheinwerfergehäuse (9) herausragenden Endabschnitt eine Handhabe wie etwa einen Werkzeugeingriff (17) für den Kreuzschlitz-Schraubendreher (18) auf. An dem in das Innere des Scheinwerfergehäuses (9) ragenden Endabschnitt weist die Einstellschraube (30) eine Gewindeschaft auf, der in ein Gewindestück (31) eingeschraubt ist. Das Gewindestück (31) greift mit einer seitlich abstehenden Kugel zwischen zwei Rippen (32) der Sensoreinheit (2) ein. Die in den Figuren 4 und 5 dargestellte Sensoreinheit (2) kann zusätzlich mit einer Kurvenregelungsanlage gekoppelt sein, die dann mit einem Kurvensteller (nicht dargestellt) gekoppelt ist. Der Kurvensteller kann, wie der Reichweitesteller (21) in Fig. 3, an Stelle der manuell verstellbaren Einstellschraube (30) in Fig.5 in eine Öffnung des Gehäuses (2) eingesetzt sein und greift mit einem Kugelkopf zwischen die Rippen (32) der Sensoreinheit(2) ein. In einer Fahrbahnkurve schwenkt der von der Kurvenregelungsanlage gesteuerte Kurvensteller die Sensoreinheit (2) um einen der Fahrbahnkurve angepassten Winkel um die Fahrzeughochachse (7).

## Patentansprüche

1. Scheinwerferbaugruppe (1) für ein Kraftfahrzeug, mit einem Scheinwerfergehäuse (9), in dem mindestens ein Scheinwerfer und eine Sensoreinheit (2) angebracht sind, wobei der Scheinwerfer und die Sensoreinheit (2) durch eine Öffnung des Scheinwerfergehäuses (9) nach außen gerichtet sind, dadurch gekennzeichnet, daß die Sensoreinheit (2) in einer Haltevorrichtung (4, 6) angebracht ist, in der sie unabhängig vom Scheinwerfer ausrichtbar ist.

2. Scheinwerferbaugruppe nach Anspruch 1, dadurch gekennzeichnet, daß die Haltevorrichtung (4, 6) ein Schwenklager aufweist, in dem die Sensoreinheit (2) um die Fahrzeugquerachse (5) verdrehbar gelagert ist.

3. Scheinwerferbaugruppe nach einem der Ansprüche 1 und 2, dadurch gekennzeichnet, daß die Haltevorrichtung ein Schwenklager aufweist, in dem Sensoreinheit (2) um die Fahrzeughochachse (7) verdrehbar gelagert ist.

4. Scheinwerferbaugruppe nach einem der Ansprüche 1 bis 3, dadurch gekennzeichnet, daß die Sensoreinheit sich in einem Sensorgehäuse (2) befindet.

5. Scheinwerferbaugruppe nach einem der Ansprüche 1 bis 4, dadurch gekennzeichnet, daß die Haltevorrichtung einen Tragrahmen (4) aufweist, in dem die Sensoreinheit (2) um die Fahrzeugquerachse (5) verschwenkbar gelagert ist.

6. Scheinwerferbaugruppe nach einem der Ansprüche 1 bis 5, dadurch gekennzeichnet, daß der Tragrahmen (4) um die Fahrzeughochachse (7) am Scheinwerfergehäuse (9)schwenkbar gelagert ist.

7. Scheinwerferbaugruppe nach einem der Ansprüche 1 bis 6, dadurch gekennzeichnet, daß die Sensoreinheit (2) optische Sensorelemente, wie zum Beispiel einen Infrarot-Abstandsmesser, aufweist.

8. Scheinwerferbaugruppe nach einem der Ansprüche 1 bis 9, dadurch gekennzeichnet,daß die Sensoreinheit (2) durch eine Reichweiteregelungsanlage um die horizontale Fahrzeugquerachse (5) verstellbar ist.

9. Scheinwerferbaugruppe nach Anspruch 10, dadurch gekennzeichnet, daß die Reichweiteregelungsanlage einen am Scheinwerfergehäuse (9) befestigten statischen Reichweiteregler aufweist, durch den eine manuelle Verstellung vom Fahrzeuginnenraum her erfolgt.

10. Scheinwerferbaugruppe nach Anspruch 10, dadurch gekennzeichnet,daß die Reichweiteregelungsanlage einen am Scheinwerfergehäuse (9) befestigten dynamischen Reichweiteregler (21) aufweist, durch den die Verstellung der Sensoreinheit (2) automatisch erfolgt.

11. Scheinwerferbaugruppe nach einem der Ansprüche 10 bis 12, dadurch gekennzeichnet,daß für die Sensoreinheit (2) und einem Scheinwerferreflektor (22) zusammen ein Reichweiteregler (21) vorgesehen ist und zwischen der Sensoreinheit (2) und dem Scheinwerferreflektor (22) eine gelenkartige Vorrichtung (23) besteht.

12. Scheinwerferbaugruppe nach Anspruch 13, dadurch gekennzeichnet,daß die Vorrichtung (23)ein Einstellmittel umfaßt, durch welches die Sensoreinheit (2) um die Fahrzeugquerachse (5) manuell justierbar ist.

13. Scheinwerferbaugruppe nach Anspruch 14, dadurch gekennzeichnet, daß die Einstellmittel eine manuell verstellbare Einstellschraube (24), eine auf die Einstellschraube (24) aufgeschraubte Mutter (25), welche in einer Kugelschale (26) der Sensoreinheit (2) schwenkbar gelagert ist, und mit einer Gelenkverbindung (27) mit dem Scheinwerferreflektor (22) verbunden ist.

14. Scheinwerferbaugruppe nach einem der vorstehenden Ansprüche, dadurch gekennzeichnet,daß einem Scheinwerferreflektor (22) und der Sensoreinheit (2) jeweils ein Reichweiteregler (21) zugeordnet sind, die synchron verstellbar sind.

15. Scheinwerferbaugruppe nach einem der vorstehenden Ansprüche, dadurch gekennzeichnet, daß die Sensoreinheit (2) mit einer Kurvenregelunganlage gekoppelt ist, durch die die Sensoreinheit um die Fahrzeughochachse (7) verstellbar ist.
